# EUROPEAN PATENT APPLICATION

(11) **EP 4 832 174 A1**
(43) Date of publication of application: **28.10.2026**
(21) Application number: 25793311.9
(22) Date of filing: 19.03.2025
(51) Int. Cl.: H01M 10/6556, H01M 10/6567, H01M 10/6568, H01M 10/613

(54) **BATTERY, ELECTRIC DEVICE AND MANUFACTURING PROCESS FOR THERMAL MANAGEMENT COMPONENT**

(30) Priority: 24.04.2024 CN 202410501046
(71) Applicant: Contemporary Amperex Technology Co., Limited, Ningde, Fujian 352100 (CN)
(72) Inventor: ZHOU, Cong, Ningde, Fujian 352100 (CN)
(74) Representative: Aera A/S
(86) International application number: PCT/CN2025/083342
(87) International publication number: WO 2025/223113

(57) **Abstract**

The present application relates to a battery, an electric device and a manufacturing process for a thermal management component. The battery comprises a case, battery cells and a thermal management component, wherein the battery cells are disposed in the case; and the thermal management component is disposed in the case and is configured to accommodate a heat exchange medium to regulate the temperatures of the battery cells. The thermal management component comprises: a heat exchange tube, which has a heat exchange flow channel, wherein an end of the heat exchange tube serves as a port of the heat exchange flow channel; a current collector, which is fitted to the end of the heat exchange tube and is in communication with the port; and an adapter, which is connected between the heat exchange tube and the current collector and is configured to connect to the current collector and the heat exchange tube in a sealing manner. In the present application, the adapter is disposed between the heat exchange tube and the current collector, and connection and fixation between the heat exchange tube and the current collector are realized by means of the adapter. The adapter is connected between the current collector and the heat exchange tube in a sealing manner, such that the current collector and the heat exchange tube are fitted more tightly, and the heat exchange tube and the adapter are connected stably, thereby improving the stability of connection between the heat exchange tube and the current collector.

## Description

### CROSS-REFERENCE

The present application refers to Chinese Patent Application No. 2024105010465, entitled "THERMAL MANAGEMENT COMPONENT AND MANUFACTURING PROCESS THEREFOR, BATTERY, AND ELECTRIC DEVICE", filed on April 24, 2024, which is incorporated herein by reference in its entirety.

### TECHNICAL FIELD

The present application relates to the technical field of batteries, and in particular, to a battery, an electric device, and a manufacturing process for a thermal management component.

### BACKGROUND

Energy conservation and emission reduction are the keys to the sustainable development of the automobile industry. Electric vehicles have become an important part of the sustainable development of the automobile industry due to their energy-saving and environmental protection advantages. For electric vehicles, the battery technology is an important factor in their development.

Temperature has a significant impact on the performance of a battery. Therefore, in conventional technologies, a battery is provided with a thermal management component for cooling the battery or heating the battery in a low-temperature environment, thereby enabling the battery to reach a normal operating temperature range.

However, in the current thermal management component, it is difficult to control the dimension and the surface flatness of a heat exchange tube, which easily leads to poor connection when the heat exchange tube is connected to a manifold, thereby affecting the overall performance of the thermal management component.

### SUMMARY

Based on this, the present application provides a battery, an electric device, and a manufacturing process for a thermal management component.

In a first aspect, the present application provides a battery. The battery includes a case, a battery cell, and a thermal management component. The battery cell is disposed in the case. The thermal management component is disposed in the case and configured to accommodate a heat exchange medium to regulate a temperature of the battery cell. The thermal management component includes a heat exchange tube, a manifold, and an adapter member. The heat exchange tube is provided with a heat exchange flow channel, an end part of the heat exchange tube being a port of the heat exchange flow channel. The manifold is engaged with the end part of the heat exchange tube and is in communication with the port, a heat exchange medium being capable of flowing into the heat exchange flow channel via the manifold or flowing into the manifold via the heat exchange flow channel. The adapter member is connected between the heat exchange tube and the manifold. The adapter member is configured to be connected to the manifold and the heat exchange tube in a sealed manner.

Thus, the adapter member is connected between the manifold and the heat exchange tube in a sealed manner, thereby enabling a tighter fit between the two. This enables a stable connection between the heat exchange tube and the adapter member, thereby improving the connection stability between the heat exchange tube and the manifold.

In some embodiments, at least one of the heat exchange tube, the manifold, and the adapter member is an insulating structure.

In some embodiments, at least one of the heat exchange tube, the manifold, and the adapter member is a plastic structure.

In some embodiments, at least one of the heat exchange tube, the manifold, and the adapter member is a mixture of metal and nonmetal.

In some embodiments, the adapter member and the manifold are connected by welding or adhesive bonding, and the adapter member and the heat exchange tube are connected by welding or adhesive bonding.

With the above structure, a more stable connection between the heat exchange tube and the adapter member is enabled, thus improving the overall connection stability among the manifold, the adapter member, and the heat exchange tube.

In some embodiments, the adapter member includes an annular main body and a connecting wall protruding from an inner wall of the annular main body, and the end part of the heat exchange tube is connected to the connecting wall.

With the above structure, when the adapter member is connected to the end part of the heat exchange tube by the connecting wall, the annular main body may be separately disposed in an enclosing manner around outer peripheries of the heat exchange tube and the manifold, thereby achieving a stable connection between the manifold and the heat exchange tube by the adapter member.

In some embodiments, the connecting wall is a light-transmitting material, and the heat exchange tube is a light-absorbing material.

Thus, the laser may successfully penetrate the connecting wall, thereby enabling the connecting wall and the end surface of the heat exchange tube to be successfully connected by laser welding.

In some embodiments, a first step surface is formed between the connecting wall and an inner wall of the annular main body, and the first step surface is configured to be disposed in an enclosing manner around the outer periphery of the heat exchange tube when being connected to the heat exchange tube.

With the above structure, on the basis of achieving a stable connection between the manifold, the adapter member, and the heat exchange tube, the annular main body is also enabled to sleeve the outer periphery of the heat exchange tube, and the first step surface is fitted to the outer peripheral surface of the heat exchange tube, thereby facilitating better protection of a connecting structure between the adapter member and the heat exchange tube.

In some embodiments, a support member is provided in a protruding manner from a side, facing the heat exchange tube, of the connecting wall, and the support member is configured to extend into the heat exchange flow channel and support the heat exchange tube. Thus, the support member will improve the structural stability of the heat exchange tube.

In some embodiments, a plurality of support members are provided, and the support members are spaced apart from each other in a circumferential direction of the connecting wall. The plurality of support members provide multi-point support for the heat exchange flow channel, thereby improving the supporting stability.

In some embodiments, in a longitudinal direction of the connecting wall, the support members are arranged in a staggered manner. Thus, the support members form staggered support for an inner wall of the heat exchange tube, thereby further improving the supporting stability.

In some embodiments, the support member and an inner wall of the annular main body are spaced apart from each other, and a fixing groove configured to be snap-fitted to the heat exchange tube is formed by a spacing therebetween.

Thus, when the support member extends into the heat exchange flow channel of the heat exchange tube, the fixing groove will form a stable snap-fit connection to the heat exchange tube, thereby enabling a more stable connection between the support member and the heat exchange tube.

In some embodiments, the connecting wall includes a connecting part and at least two blocking sheets, the connecting part is connected between each blocking sheet and an inner wall of the annular main body, and a flow-through hole is formed by a spacing between every two adjacent blocking sheets.

Thus, when the adapter member is connected between the manifold and the heat exchange tube, the heat exchange medium will enter or exit the heat exchange flow channel via the flow-through hole, thereby achieving heat exchange with the battery cell in the heat exchange flow channel.

In some embodiments, each blocking sheet is disposed corresponding to at least one heat exchange flow channel and is configured to block the at least one heat exchange flow channel.

In some embodiments, a second step surface is formed between a side, facing the manifold, of the connecting wall and an inner wall of the annular main body, and the second step surface is configured to be disposed in an enclosing manner around an outer periphery of the manifold when being connected to the manifold.

With the above structure, on the basis of achieving a stable connection between the manifold, the adapter member, and the heat exchange tube, the annular main body is also enabled to sleeve the outer periphery of the manifold, and the second step surface is fitted to the outer peripheral surface of the manifold, thereby facilitating better protection of a connecting structure between the manifold and the heat exchange tube.

In some embodiments, the manifold includes a first connecting part and a second connecting part; the first connecting part is disposed on the second connecting part, and a third step surface is formed between the first connecting part and the second connecting part; the third step surface is configured to be fitted to the second step surface.

Thus, the third step surface and the second step surface are fitted to each other, thereby achieving a quick and stable connection between the manifold and the adapter member.

In some embodiments, the annular main body is a light-transmitting material, and the second connecting part is a light-absorbing material. Thus, the laser may successfully penetrate the annular main body, thereby enabling the annular main body and the second connecting part to be successfully connected by laser welding.

In some embodiments, the battery includes a plurality of battery cells and a plurality of thermal management components, the plurality of battery cells are arranged in a plurality of rows, and each row of the battery cells is disposed between two adjacent thermal management components.

In a second aspect, the present application further provides an electric device. The electric device includes the battery described above, the battery being used for providing electric energy.

In a third aspect, the present application further provides a manufacturing process for a thermal management component. The manufacturing process is used for manufacturing the thermal management component described above, the manufacturing process including the following steps:
connecting the connecting wall and an end surface of the heat exchange tube that abut against each other by laser welding, where a laser is emitted in a preset direction; and
fixing the manifold to one end, facing away from the heat exchange tube, of a corresponding adapter member in the preset direction.

In some embodiments, the step of fixing the manifold to the end, facing away from the heat exchange tube, of the corresponding adapter member in the preset direction specifically includes the following steps:
disposing a second step surface in an enclosing manner around an outer periphery of a second connecting part and allowing the second step surface and a third step surface to be fitted to each other; and
performing laser welding between the second step surface and the third step surface, and emitting a laser in a direction intersecting the preset direction; and/or performing bonding or hot melt welding between an end surface of a first connecting part and an end surface of the adapter member.

According to the battery, the electric device, and the manufacturing process for the thermal management component, an adapter member is disposed between the heat exchange tube and the manifold, and the connection and fixation between the heat exchange tube and the manifold are achieved by the adapter member. The adapter member is connected between the manifold and the heat exchange tube in a sealed manner, thereby enabling a tighter fit between the two. This enables a stable connection between the heat exchange tube and the adapter member, thereby improving the connection stability between the heat exchange tube and the manifold.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to one or more embodiments.
FIG. 2 is a schematic diagram of an exploded structure of a battery according to one or more embodiments.
FIG. 3 is a schematic structural diagram of a thermal management component according to one or more embodiments.
FIG. 4 is an exploded view of a thermal management component according to one or more embodiments.
FIG. 5 is a partially enlarged view of the portion A in FIG. 4.
FIG. 6 is a schematic structural diagram of one side of an adapter member of a thermal management component according to one or more embodiments.
FIG. 7 is a schematic structural diagram of a manifold of a thermal management component according to one or more embodiments.
FIG. 8 is a schematic structural diagram of another side of an adapter member of a thermal management component according to one or more embodiments.
FIG. 9 is a flowchart of a manufacturing process for a thermal management component according to one or more embodiments.
FIG. 10 is a flowchart of a manufacturing process for a thermal management component according to one or more embodiments.

Description of reference numerals: 1000, vehicle; 100, battery; 200, controller; 300, motor; 10, case; 20, battery cell; 30, thermal management component; 11, first part; 12, second part; 31, heat exchange tube; 32, manifold; 33, adapter member; 311, heat exchange flow channel; 312, end surface; 321, opening; 322, first connecting part; 323, second connecting part; 324, third step surface; 332, annular main body; 333, connecting wall; 334, first step surface; 335, second step surface; 336, support member; 337, fixing groove; 338, flow-through hole; 3331, connecting part; 3332, blocking sheet; a, preset direction.

### DETAILED DESCRIPTION

To make the above objectives, features, and advantages of the present application more apparent and easy to understand, specific embodiments of the present application will be described in detail below with reference to the drawings. In the following description, numerous specific details are set forth in order to provide a thorough understanding of the present application. However, the present application can be implemented in many other ways different from those described herein, and similar improvements can be made by those skilled in the art without departing from the spirit of the present application. Therefore, the present application is not limited to the specific embodiments disclosed below.

In the description of the present application, it should be understood that if there are the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, orientations or positional relationships indicated by these terms are based on the orientations or positional relationships shown in the drawings. They are merely for the convenience of describing the present application and simplifying the description, rather than indicating or implying that the apparatus or element referred to must have a specific orientation or be constructed and operated in the specific orientation, and thus should not be construed as limiting the present application.

In addition, if there are the terms "first" and "second", these terms are used for description only and are not to be construed as indicating or implying relative importance or to implicitly indicate the number of technical features indicated. Thus, a feature defined by "first" or "second" may explicitly or implicitly indicate that at least one such feature is included. In the description of the present application, if there is the term "plurality of", unless otherwise explicitly and specifically defined, "plurality of" means at least two, for example, two, three, and the like.

In the present application, unless otherwise explicitly specified and defined, if there are the terms "mount", "interconnect", "connect", "fix", and the like, these terms should be interpreted in their broad senses. For example, unless otherwise explicitly defined, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the present application can be understood based on specific conditions.

In the present application, unless otherwise explicitly specified and defined, if there is a description that a first feature is "above" or "below" a second feature and other similar descriptions, the meanings thereof may be that the first feature and the second feature are in direct contact, or that the first feature and the second feature are in indirect contact via an intermediate. Moreover, a first feature being "on", "above", and "over" a second feature may be that the first feature is directly above or obliquely above the second feature, or simply indicates that the level of the first feature is higher than that of the second feature. A first feature being "under", "below", and "beneath" a second feature may be that the first feature is directly below or obliquely below the second feature, or simply indicates that the level of the first feature is lower than that of the second feature.

It should be noted that if an element is referred to as being "fixed to" or "disposed on" another element, the element may be directly on the other element or there may be an intermediate element in between. If an element is referred to as being "connected" to another element, the element may be directly connected to the other element or there may also be an intermediate element in between. The terms "perpendicular", "horizontal", "upper", "lower", "left", "right", and similar descriptions, if present, are used in the present application for description only and do not necessarily indicate the only implementation.

At present, judging from the trends in the market, the application of power batteries is becoming increasingly widespread. Power batteries are not only applied in energy storage power systems such as hydropower, thermal power, wind power, and solar power stations, but are also widely applied in electric transportation vehicles such as electric bicycles, electric motorcycles, and electric cars, and other fields. With the continuous expansion of the application field of power batteries, the market demand for power batteries is also constantly increasing.

The battery generally includes a battery cell and a case. The battery cell is placed in the case, and the case can provide an accommodating space for the battery cell and provide a certain protective effect. For a battery, a battery cell is a component in which an electrochemical reaction actually occurs. When an electrochemical reaction occurs inside the battery cell, heat is generated.

With the cycling of the battery, the battery cell continuously generates heat, such that the temperature inside the battery gradually rises, which affects the performance of the battery. Therefore, at present, a thermal management component is generally disposed inside the battery for cooling the battery or heating the battery in a low-temperature environment, thereby enabling the battery to reach a normal operating temperature range.

However, in the structure of the thermal management component, a port of a heat exchange tube is flat, and the dimension and the surface flatness of the heat exchange tube are difficult to control. When the heat exchange tube is connected to the manifold, poor fitting occurs between the connecting surfaces, such that the connection between the heat exchange tube and the manifold is poor, which affects the overall performance of the thermal management component.

Based on the above considerations, in order to solve the problem at present that a poor connection is prone to occur when the heat exchange tube is connected to the manifold, one or more embodiments of the present application provide a battery. An adapter member is disposed between the heat exchange tube and the manifold, and the connection and fixation between the heat exchange tube and the manifold are achieved by the adapter member. The adapter member is connected to an end surface of the heat exchange tube by a connecting wall, such that the end surface of the heat exchange tube can abut against the connecting wall, thereby enabling a tighter fit between the two. This enables a stable connection between the heat exchange tube and the adapter member, thereby improving the connection stability between the heat exchange tube and the manifold.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments are described by taking a vehicle 1000 as an example of the electric device according to an embodiment of the present application.

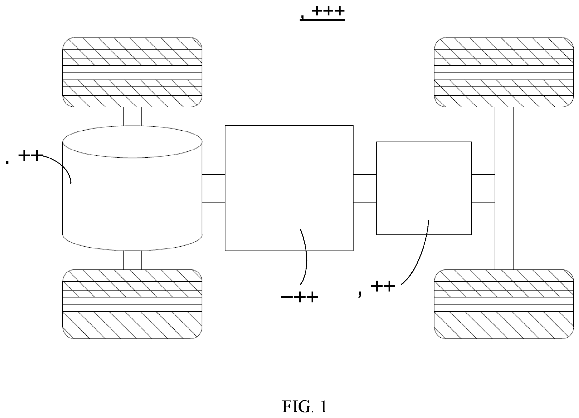

Referring to FIG. 1, the vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operation power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

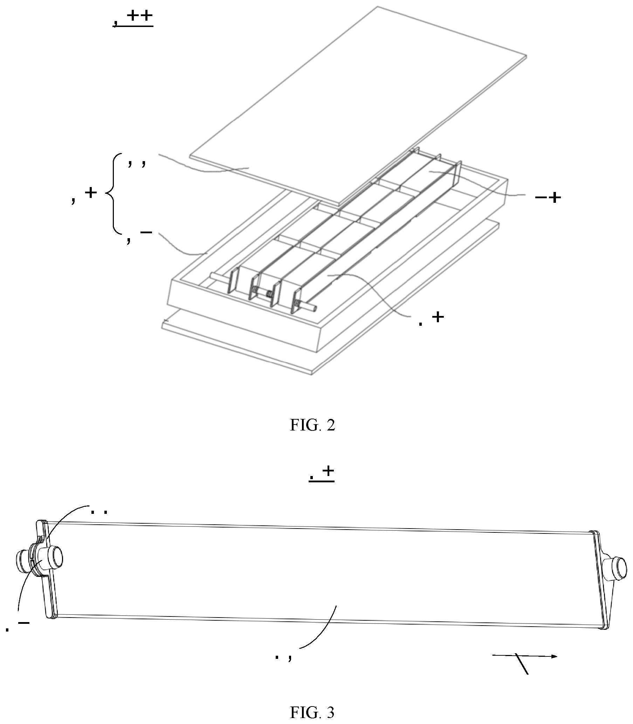

Referring to FIG. 2, the battery 100 includes a case 10 and battery cells 20. The battery cells 20 are accommodated in the case 10. The case 10 is configured to provide an accommodating space for the battery cells 20, and the case 10 may be of various structures. In some embodiments, the case 10 may include a first part 11 and a second part 12. The first part 11 and the second part 12 are lidded with each other, and the first part 11 and the second part 12 jointly define an accommodating space for accommodating the battery cells 20. The second part 12 may be of a hollow structure with one end open, and the first part 11 may be of a plate-shaped structure. The open side of the second part 12 is lidded with the first part 11, such that the first part 11 and the second part 12 jointly define the accommodating space. The first part 11 and the second part 12 may also both be of a hollow structure with one side open, and the open side of the second part 12 is lidded with the open side of the first part 11. Certainly, the case 10 formed by the first part 11 and the second part 12 may be in various shapes, such as a cylinder and a rectangular parallelepiped.

In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may also be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

Referring to FIGs. 3, 4, and 5, an embodiment of the present application provides a battery 100. The battery includes a case 10, a battery cell 20, and a thermal management component 30. The battery cell 20 is disposed in the case 10. The thermal management component 30 is disposed in the case 10 and configured to accommodate a heat exchange medium to regulate the temperature of the battery cell 20. The thermal management component 30 includes a heat exchange tube 31, a manifold 32, and an adapter member 33. The heat exchange tube 31 is provided with a heat exchange flow channel 311, and an end part of the heat exchange tube 31 is a port of the heat exchange flow channel 311. The manifold 32 is engaged with the end part of the heat exchange tube 31 and in communication with the port, and a heat exchange medium can flow into the heat exchange flow channel 311 via the manifold 32 or flow into the manifold 32 via the heat exchange flow channel 311. The adapter member 33 is connected between the heat exchange tube 31 and the manifold 32. The adapter member 33 is configured to be connected to the manifold 32 and the heat exchange tube 31 in a sealed manner.

The thermal management component 30 refers to a component disposed in the case 10 of the battery 100 and configured to accommodate the heat exchange medium to regulate the temperature of the battery cell 20 in the case 10. The battery cell 20 generates heat during cycling, and the battery cell 20 may be cooled by the thermal management component 30. In this case, the thermal management component 30 may accommodate a cooling medium, and the thermal management component 30 may also be referred to as a cooling member, a cooling system, a cooling plate, a liquid cooling plate, or the like. Certainly, in some other cases, the thermal management component 30 may also be configured to heat the battery cell 20, which is not described in detail herein.

The heat exchange flow channel 311 is formed inside the heat exchange tube 31. The heat exchange flow channel 311 may provide a flow path for the heat exchange medium. By arranging the heat exchange tube 31 to be fitted to a surface of the battery cell 20, when the heat exchange medium flows in the heat exchange flow channel 311, the heat generated by the battery cell 20 will be taken away, thereby achieving the cooling of the battery cell 20.

Specifically, the heat exchange flow channel 311 extends in a preset direction a and penetrates through the heat exchange tube 31 in the preset direction a. In other words, one end, in the preset direction a, of the heat exchange flow channel 311 forms an inlet, and the other end of the heat exchange flow channel forms an outlet. The heat exchange medium is introduced into the heat exchange flow channel 311 from the inlet and flows out from the outlet, thereby achieving heat exchange during this process.

The manifold 32 is disposed at two opposite ends of the heat exchange tube 31 in the preset direction a. When the manifold 32 is disposed on an inlet side of the heat exchange flow channel 311, an opening 321 on the manifold 32 is an input port for the heat exchange medium. When the manifold 32 is disposed on an outlet side of the heat exchange flow channel 311, the opening 321 on the manifold 32 is an output port for the heat exchange medium.

When the manifold 32 is connected to the heat exchange tube 31, the opening 321 on the manifold 32 is in communication with the heat exchange flow channel 311. Thus, the heat exchange medium may be input into the heat exchange flow channel 311 via the input port on the manifold 32, such that the heat exchange medium can flow in the heat exchange flow channel 311 and take away the heat of the battery cell 20, and finally flow out from the output port on the manifold 32.

It should be noted that the heat generated by the battery cell 20 is generally concentrated on a large surface of the battery cell 20. Therefore, the heat exchange tube 31 is fitted to the large surface of the battery cell 20, such that the heat exchange medium can better exchange heat with the large surface of the battery cell 20. In this way, the heat exchange tube 31 is generally configured as a flat structure to match the large surface of the battery cell 20.

The heat exchange tube 31 is hollow inside to form the heat exchange flow channel 311, making it difficult to control the dimension and the surface flatness at the port of the heat exchange tube 31. When the heat exchange tube 31 is connected to the manifold 32, the heat exchange tube 31 may not be completely fitted to the manifold 32, which may also lead to an unstable connection between the heat exchange tube 31 and the manifold 32.

Based on this, in the present application, the adapter member 33 is disposed between the heat exchange tube 31 and the manifold 32, and the heat exchange tube 31 is connected to the manifold 32 in a sealed manner by using the adapter member 33.

When the adapter member 33 is connected between the heat exchange tube 31 and the manifold 32, an end surface 312 of the heat exchange tube 31 will abut against the adapter member 33, thereby connecting and fixing the adapter member 33 to the end surface 312 of the heat exchange tube 31.

Thus, the end surface 312 of the heat exchange tube 31 abuts against the adapter member 33, thereby enabling a tighter fit between the two. This enables a stable connection between the heat exchange tube 31 and the adapter member 33, thereby improving the connection stability between the heat exchange tube 31 and the manifold 32.

In some embodiments, at least one of the heat exchange tube 31, the manifold 32, and the adapter member 33 is an insulating structure.

In some embodiments, at least one of the heat exchange tube 31, the manifold 32, and the adapter member 33 is a plastic structure.

In some embodiments, at least one of the heat exchange tube 31, the manifold 32, and the adapter member 33 is a mixture of metal and nonmetal.

In some embodiments, the adapter member 33 and the manifold 32 are connected by welding or adhesive bonding, and the adapter member 33 and the heat exchange tube 31 are connected by welding or adhesive bonding.

Furthermore, the adapter member 33 is surface-contact connected to the end surface 312 of the heat exchange tube 31.

Specifically, when the adapter member 33 is connected between the heat exchange tube 31 and the manifold 32, the end surface 312 of the heat exchange tube 31 abuts against the adapter member 33 and is fitted to one of surfaces of the adapter member 33.

Thus, the contact area between the adapter member 33 and the end surface 312 of the heat exchange tube 31 is increased, thereby enabling a more stable connection between the heat exchange tube 31 and the adapter member 33, and thus improving the overall connection stability among the manifold 32, the adapter member 33, and the heat exchange tube 31.

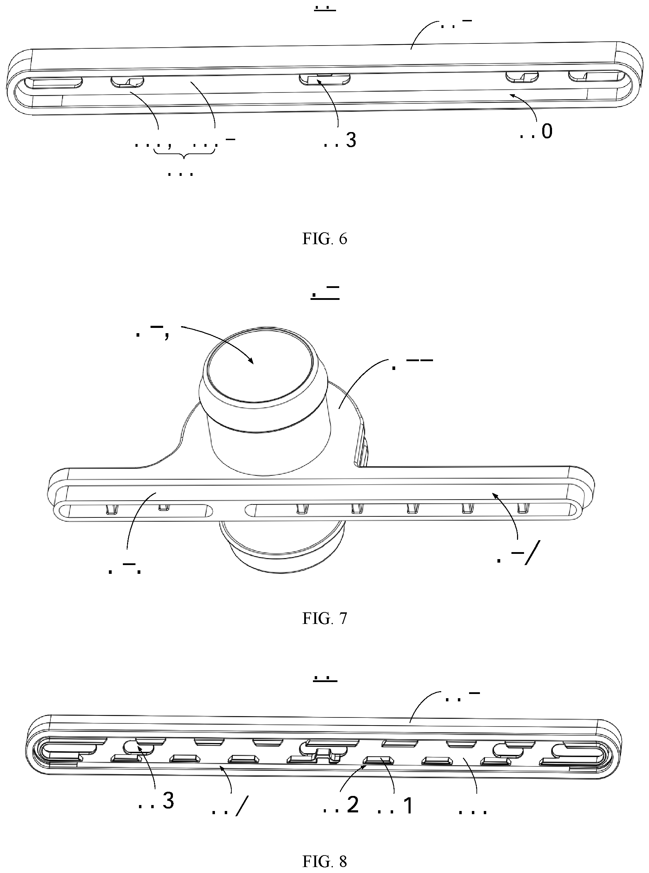

As shown in FIGs. 6 and 8, in some embodiments, the adapter member 33 includes an annular main body 332 and a connecting wall 333 protruding from an inner wall of the annular main body 332, and the end part of the heat exchange tube 31 is connected to the connecting wall 333.

Specifically, the connecting wall 333 is disposed in a direction perpendicular to the preset direction a. When the adapter member 33 is connected to the heat exchange tube 31, an end surface of the end part of the heat exchange tube 31 will abut against the connecting wall 333 and is in surface contact with the connecting wall 333.

With the above structure, when the adapter member 33 is connected to the end surface 312 of the heat exchange tube 31 by the connecting wall 333, the annular main body 332 may be separately disposed in an enclosing manner around the outer peripheries of the heat exchange tube 31 and the manifold 32, thereby achieving a stable connection between the manifold 32 and the heat exchange tube 31 by the adapter member 33.

Specifically, when the adapter member 33 is connected to the heat exchange tube 31 and the manifold 32, the annular main body 332 will separately sleeve the outer peripheries of the heat exchange tube 31 and the manifold 32, thereby separately achieving the connection to the heat exchange tube 31 and the manifold 32.

By providing the annular main body 332, when the adapter member 33 is connected to the end surface 312 of the heat exchange tube 31 by the connecting wall 333, the connection between the adapter member 33 and the manifold 32 is achieved by the annular main body 332, thereby achieving a stable connection between the manifold 32 and the heat exchange tube 31 by the adapter member 33.

In some embodiments, the connecting wall 333 is a light-transmitting material, and the heat exchange tube 31 is a light-absorbing material.

Specifically, the materials of the connecting wall 333 and the heat exchange tube 31 may be, but are not limited to, polyamide (PA), polyphenylene sulfide (PPS), polyphthalamide (PPA), or the like.

When the adapter member 33 and the heat exchange tube 31 are connected by laser welding, the connecting wall 333 is configured as a light-transmitting material, and the heat exchange tube 31 is configured as a light-absorbing material. In this way, a laser will penetrate the connecting wall 333 and be directed onto a connection position between the connecting wall 333 and the end surface 312 of the heat exchange tube 31, such that the connecting wall 333 and the end surface 312 of the heat exchange tube 31 can melt simultaneously, thereby achieving a successful connection between the two.

Thus, by configuring the material of the connecting wall 333 to be a light-transmitting material and configuring the material of the heat exchange tube 31 to be a light-absorbing material, the laser may successfully penetrate the connecting wall 333, thereby enabling the connecting wall 333 and the end surface 312 of the heat exchange tube 31 to be successfully connected by laser welding.

In some embodiments, a first step surface 334 is formed between the connecting wall 333 and an inner wall of the annular main body 332, and the first step surface 334 is configured to be disposed in an enclosing manner around the outer periphery of the heat exchange tube 31 when being connected to the heat exchange tube 31.

Specifically, the connecting wall 333 is perpendicular to the inner wall of the annular main body 332 and is disposed in the middle of the annular main body 332. Thus, the annular main body 332 is divided into a left part and a right part by the connecting wall 333. The first step surface 334 is formed between the connecting wall 333 and the inner wall of the annular main body 332 on the left part.

When the adapter member 33 is connected to the heat exchange tube 31, the first step surface 334 may sleeve the outer periphery of the heat exchange tube 31 and be fitted to an outer peripheral surface of the heat exchange tube 31, thereby facilitating laser welding of the end surface 312 of the heat exchange tube 31 to the connecting wall 333. Thus, the first step surface 334 sleeves the outer periphery of the end surface 312 of the heat exchange tube 31, thereby providing a certain protective effect on a position where the heat exchange tube 31 is connected to the connecting wall 333.

With the above structure, on the basis of achieving a stable connection between the manifold 32, the adapter member 33, and the heat exchange tube 31, the annular main body 332 is also enabled to separately sleeve the outer periphery of the heat exchange tube 31, and the first step surface 334 is fitted to the outer peripheral surface of the heat exchange tube 31, thereby facilitating better protection of a connecting structure between the adapter member 33 and the heat exchange tube 31.

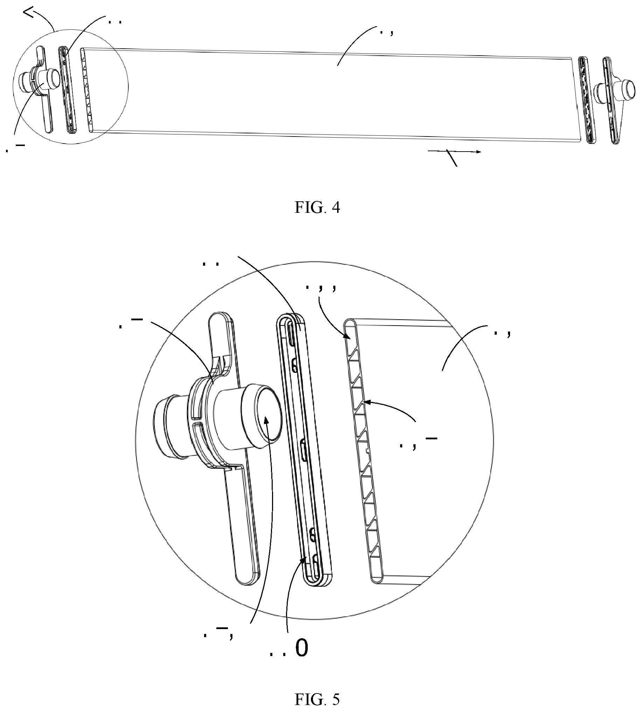

As shown in FIGs. 4 and 8, in some embodiments, a support member 336 is provided in a protruding manner from a side, facing the heat exchange tube 31, of the connecting wall 333, and the support member 336 is configured to extend into the heat exchange flow channel 311 and support the heat exchange tube 31.

Specifically, the support member 336 may be, but is not limited to, a support rib. The support rib is disposed in a protruding manner on a surface of the connecting wall 333 on a side facing the heat exchange tube 31. When the adapter member 33 sleeves the heat exchange tube 31, an outer surface of the heat exchange tube 31 and an inner surface of the annular main body 332 are fitted to each other.

Meanwhile, the support member 336 extends into the heat exchange flow channel 311 of the heat exchange tube 31, thereby providing support for the heat exchange tube 31. As a result, the stability at the port of the heat exchange tube 31 will be improved, thereby improving the surface flatness at the port position and enabling a more stable connection between the end surface 312 of the heat exchange tube 31 and the connecting wall 333.

By providing the support member 336 capable of extending into the heat exchange flow channel 311 of the heat exchange tube 31, support for the heat exchange tube 31 is provided. As a result, the stability at the port of the heat exchange tube 31 will be improved, thereby improving the surface flatness at the port position, and thus improving the connection stability between the heat exchange tube 31 and the adapter member 33.

In some embodiments, a plurality of support members 336 are provided, and the support members 336 are spaced apart from each other in a circumferential direction of the connecting wall 333. Thus, the plurality of support members 336 provide multi-point support for the heat exchange flow channel 311, thereby improving the supporting stability.

In some embodiments, in a longitudinal direction of the connecting wall 333, the support members 336 are arranged in a staggered manner.

Specifically, support members 336 at an upper end of the connecting wall 333 and gaps between support members 336 at a lower end of the connecting wall are disposed corresponding to each other; that is, the support members 336 at the upper end of the connecting wall 333 exactly align with the gaps between two adjacent support members 336 at the lower end of the connecting wall.

Thus, when the support members 336 extend into the heat exchange flow channel 311 and form support for the end surface of the heat exchange tube 31, the support members 336 will form staggered support for an inner wall of the heat exchange tube 31, thereby further improving the supporting stability.

In some embodiments, the support member 336 and an inner wall of the annular main body 332 are spaced apart from each other, and a fixing groove 337 configured to be snap-fitted to the heat exchange tube 31 is formed by a spacing therebetween.

When the adapter member 33 sleeves the heat exchange tube 31, the outer surface of the heat exchange tube 31 and the inner surface of the annular main body 332 are fitted to each other, and the heat exchange tube 31 is inserted into the fixing groove 337 between the support member 336 and the annular main body 332, thereby achieving the fixation of the heat exchange tube 31.

Thus, when the support member 336 extends into the heat exchange flow channel 311 of the heat exchange tube 31, the fixing groove 337 will form a stable snap-fit connection to the heat exchange tube 31, thereby enabling a more stable connection between the support member 336 and the heat exchange tube 31.

As shown in FIGs. 6 and 8, in some embodiments, the connecting wall 333 includes a connecting part 3331 and at least two blocking sheets 3332, the connecting part 3331 is connected between each blocking sheet 3332 and an inner wall of the annular main body 332, and a flow-through hole 338 is formed by a spacing between every two adjacent blocking sheets 3332.

Specifically, the connecting part 3331 is annularly connected to the inner wall of the annular main body 332, thereby enabling each blocking sheet 3332 to be stably connected to the inner wall of the annular main body 332.

Two or more blocking sheets 3332 may be provided. When two blocking sheets 3332 are provided, the two blocking sheets 3332 are spaced apart from each other and form the flow-through hole 338. When the adapter member 33 is connected between the heat exchange tube 31 and the manifold 32, the heat exchange medium will enter or exit the heat exchange flow channel 311 via the flow-through hole 338, thereby achieving heat exchange with the battery cell 20 in the heat exchange flow channel 311.

Thus, when the adapter member 33 is connected between the manifold 32 and the heat exchange tube 31, the heat exchange medium will enter or exit the heat exchange flow channel 311 via the flow-through hole 338, thereby achieving heat exchange with the battery cell 20 in the heat exchange flow channel 311.

In some embodiments, each blocking sheet 3332 is disposed corresponding to at least one heat exchange flow channel 311 and is configured to block the at least one heat exchange flow channel 311.

Specifically, a partition member is disposed between every two adjacent heat exchange flow channels 311, and a plurality of partition members are spaced apart from each other, thereby forming a heat exchange flow channel 311.

Thus, when the adapter member 33 is connected between the manifold 32 and the heat exchange tube 31, in one aspect, the blocking sheet 3332 will abut against an end surface of the partition member, thereby further improving the connection stability between the adapter member 33 and the heat exchange tube 31. In another aspect, the blocking sheet 3332 will also block a part of the heat exchange flow channel 311, thereby more fully utilizing an internal space of the heat exchange flow channel 311.

In some embodiments, a second step surface 335 is formed between a side, facing the manifold 32, of the connecting wall 333 and an inner wall of the annular main body 332, and the second step surface 335 is configured to be disposed in an enclosing manner around an outer periphery of the manifold 32 when being connected to the manifold 32.

With the above structure, on the basis of achieving a stable connection between the manifold 32, the adapter member 33, and the heat exchange tube 31, the annular main body 332 is also enabled to sleeve the outer periphery of the manifold 32, and the second step surface 335 is fitted to the outer peripheral surface of the manifold 32, thereby facilitating better protection of a connecting structure between the manifold 32 and the heat exchange tube 31.

As shown in FIGs. 5 and 7, in some embodiments, the manifold 32 includes a first connecting part 322 and a second connecting part 323; a third step surface 324 is formed between the first connecting part and the second connecting part 323; the third step surface 324 is configured to be fitted to the second step surface 335.

Specifically, the second connecting part 323 is disposed on the first connecting part 322, and a step structure is formed between the two, such that an outer peripheral surface of the second connecting part 323 is formed as the third step surface 324.

The adapter member 33 sleeves the second connecting part 323 of the manifold 32, the second step surface 335 and the third step surface 324 are fitted to each other, and then the adapter member 33 is connected to the manifold 32 by a connection method such as bonding, laser welding, or hot melt welding.

Thus, the adapter member 33 sleeves the second connecting part 323, such that the third step surface 324 and the second step surface 335 are fitted to each other, thereby achieving a quick and stable connection between the manifold 32 and the adapter member 33.

In addition, when the adapter member 33 sleeves the second connecting part 323, an end surface of the adapter member 33 will abut against an end surface of the first connecting part 322, thereby forming a limiting fit. Moreover, an outer peripheral surface of the adapter member 33 and the outer peripheral surface of the second connecting part 323 are located in the same plane, thereby enabling a more stable connection between the adapter member 33 and the manifold 32.

In some embodiments, the annular main body 332 is a light-transmitting material, and the second connecting part 323 is a light-absorbing material.

Specifically, the annular main body 332 and the second connecting part 323 may be, but are not limited to, polyamide (PA), polyphenylene sulfide (PPS), polyphthalamide (PPA), or the like.

When the adapter member 33 sleeves the second connecting part 323, the third step surface 324 and the second step surface 335 are fitted to each other, and the third step surface 324 and the second step surface 335 may be connected by laser welding. Thus, the annular main body 332 is configured as a light-transmitting material, and the second connecting part 323 is configured as a light-absorbing material, such that a laser can penetrate the adapter member 33 and be directed onto a connection position between the third step surface 324 and the second step surface 335, and the third step surface 324 and the second step surface 335 can melt simultaneously, thereby achieving a successful connection between the two.

Thus, with the above structure, the laser may successfully penetrate the annular main body 332, thereby enabling the annular main body 332 and the second connecting part 323 to be successfully connected by laser welding.

In some embodiments, the battery 100 includes a plurality of battery cells 20 and a plurality of thermal management components 30, the plurality of battery cells 20 are arranged in a plurality of rows, and each row of the battery cells 20 is disposed between two adjacent thermal management components 30.

It can be understood that the shape of the outer surface of the heat exchange tube 31 may be changed based on the shape of the battery cell 20. For example, if the battery cell 20 is a rectangular parallelepiped, the heat exchange tube 31 may be a straight tube with an outer surface having a plane parallel to an outer surface of the battery cell 20, and the outer surface of the heat exchange tube 31 is in contact with the outer surface of the battery cell 20 to effectively increase the contact area. For another example, when the battery cell 20 is cylindrical, the heat exchange tube 31 may be wavy to match the shape of the battery cell 20.

Certainly, the outer surface of the heat exchange tube 31 may not be completely matched with and fitted to the outer surface of the battery cell 20.

Based on the same concept as the battery 100 described above, the present application further provides an electric device. The electric device includes the battery 100 as described above, and the battery 100 is configured to provide electric energy.

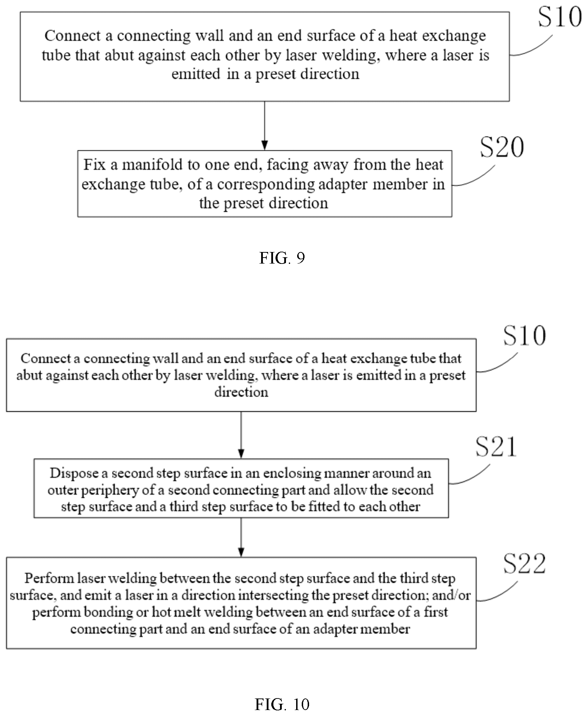

As shown in FIGs. 9 and 10, based on the same concept as the thermal management component 30 described above, the present application further provides a manufacturing process for a thermal management component 30. The manufacturing process is used for manufacturing the thermal management component 30 described above. The manufacturing process includes the following steps.

In S10, the connecting wall 333 and an end surface 312 of the heat exchange tube 31 that abut against each other are connected by laser welding, where a laser is emitted in a preset direction a.

The preset direction a is an extension direction of the heat exchange flow channel 311. Two adapter members 33 are disposed at two opposite ends of the heat exchange tube 31 in the preset direction a, respectively, and are in communication with the heat exchange flow channel 311.

Specifically, one end of the adapter member 33 sleeves the outer periphery of the heat exchange tube 31, the first step surface 334 is fitted to the outer peripheral surface of the heat exchange tube 31, and the end surface 312 of the heat exchange tube 31 abuts against the connecting wall 333. Then, a laser is emitted toward the adapter member 33 and the heat exchange tube 31 in the preset direction a. The laser penetrates the connecting wall 333 and is then directed onto the connection position between the connecting wall 333 and the end surface 312 of the heat exchange tube 31. Under the action of the laser, the connection position between the connecting wall 333 and the end surface 312 of the heat exchange tube 31 melts, such that the connecting wall and the end surface of the heat exchange tube are connected, thereby achieving a fixed connection between the adapter member 33 and the heat exchange tube 31.

In S20, the manifold 32 is fixed to one end, facing away from the heat exchange tube 31, of a corresponding adapter member 33 in the preset direction a.

After the adapter member 33 is connected to the heat exchange tube 31, two manifolds 32 are disposed on two adapter members 33 in the preset direction a, respectively. Each manifold 32 is connected to a corresponding adapter member 33, and an opening 321 of the manifold 32 is in communication with the heat exchange flow channel 311 of the heat exchange tube 31 by the adapter member 33.

Thus, a heat exchange medium is introduced into the opening 321, flows into the heat exchange flow channel 311 via the adapter member 33, and then flows out from the opening 321 at the other end, thereby enabling the heat exchange medium to flow in the heat exchange flow channel 311, and thus achieving heat exchange.

In some embodiments, in the step S20, the method specifically includes:
In S21, a second step surface 335 is disposed in an enclosing manner around an outer periphery of a second connecting part 323 and the second step surface and a third step surface 324 are allowed to be fitted to each other.

During the connection process of the manifold 32 and the heat exchange tube 31, one end of the adapter member 33 first sleeves the second connecting part 323 of the manifold 32. In this case, the second step surface 325 and the third step surface 324 are fitted to each other, and the end surface of the adapter member 33 abuts against the first connecting part 322, thereby achieving the positioning between the adapter member 33 and the manifold 32.

In S22, laser welding is performed between the second step surface 335 and the third step surface 324, and a laser is emitted in a direction intersecting the preset direction a; and/or bonding or hot melt welding is performed between an end surface of a first connecting part 322 and an end surface of the adapter member 33.

After the positioning of the adapter member 33 and the manifold 32 is completed, the two may be connected by laser welding, or may be connected by bonding or hot melt welding.

When laser welding is used, a laser is emitted in a direction perpendicular to the preset direction a, such that the laser penetrates the adapter member 33 and is directed between the second step surface 335 and the third step surface 324, the connection position between the second step surface 335 and the third step surface 324 melts, and then the second step surface and the third step surface are connected together.

In addition, when bonding or hot melt welding is used, an adhesive may be filled between the second step surface 335 and the third step surface 324 for adhesive bonding, or hot melt welding may be performed between the second step surface 335 and the third step surface 324 to achieve a connection.

Through the manufacturing process described above, the thermal management component 30 is finally assembled. During use, the thermal management component 30 is first disposed in the case 10, and a surface of the heat exchange tube 31 is fitted to the large surface of the battery cell 20. The heat exchange medium is introduced from the opening 321 of the manifold 32 on one side, and the heat exchange medium enters the heat exchange flow channel 311 and flows therein, and then flows out from the opening 321 of the manifold 32 on the other side. During this process, the heat exchange medium exchanges heat with the large surface of the battery cell 20 to regulate the temperature of the battery cell 20.

The technical features of the embodiments described above may be combined in any manner. For brevity, not all possible combinations of the technical features in the above embodiments are described. However, as long as no contradiction exists in the combinations of the technical features, such combinations should be considered to be within the scope of the specification.

The embodiments described above merely represent several implementations of the present application, and the description thereof is specific and detailed, but should not be understood as limiting the patent scope of the present application. It should be noted that various changes and modifications can be made by those of ordinary skill in the art without departing from the concept of the present application, and these changes and modifications shall all fall within the protection scope of the present application. Therefore, the protection scope of the patent in the present application shall be subject to the appended claims.

## Claims

1. A battery, comprising:
a case;
a battery cell, disposed in the case; and
a thermal management component, disposed in the case and configured to accommodate a heat exchange medium to regulate a temperature of the battery cell,
wherein the thermal management component comprises:
a heat exchange tube, provided with a heat exchange flow channel, an end part of the heat exchange tube being a port of the heat exchange flow channel;
a manifold, engaged with the end part of the heat exchange tube and in communication with the port, a heat exchange medium being capable of flowing into the heat exchange flow channel via the manifold or flowing into the manifold via the heat exchange flow channel; and
an adapter member, connected between the heat exchange tube and the manifold,
wherein the adapter member is configured to be connected to the manifold and the heat exchange tube in a sealed manner.

2. The battery according to claim 1, wherein at least one of the heat exchange tube, the manifold, and the adapter member is an insulating structure.

3. The battery according to claim 1, wherein at least one of the heat exchange tube, the manifold, and the adapter member is a plastic structure.

4. The battery according to claim 1, wherein at least one of the heat exchange tube, the manifold, and the adapter member is a mixture of metal and nonmetal.

5. The battery according to any one of claims 1 to 4, wherein the adapter member and the manifold are connected by welding or adhesive bonding, and the adapter member and the heat exchange tube are connected by welding or adhesive bonding.

6. The battery according to any one of claims 1 to 5, wherein the adapter member comprises an annular main body and a connecting wall protruding from an inner wall of the annular main body, and the end part of the heat exchange tube is connected to the connecting wall.

7. The battery according to claim 6, wherein the connecting wall is a light-transmitting material, and the heat exchange tube is a light-absorbing material.

8. The battery according to claim 6 or 7, wherein a first step surface is formed between a side, facing the heat exchange tube, of the connecting wall and an inner wall of the annular main body, and the first step surface is configured to be disposed in an enclosing manner around an outer periphery of the heat exchange tube when being connected to the heat exchange tube.

9. The battery according to any one of claims 6 to 8, wherein a support member is provided in a protruding manner from a side, facing the heat exchange tube, of the connecting wall, and the support member is configured to extend into the heat exchange flow channel and support the heat exchange tube.

10. The battery according to claim 9, wherein a plurality of support members are provided, and the support members are spaced apart from each other in a circumferential direction of the connecting wall.

11. The battery according to claim 10, wherein in a longitudinal direction of the connecting wall, the support members are arranged in a staggered manner.

12. The battery according to claim 9, wherein the support member and an inner wall of the annular main body are spaced apart from each other, and a fixing groove configured to be snap-fitted to the heat exchange tube is formed by a spacing therebetween.

13. The battery according to any one of claims 6 to 12, wherein the connecting wall comprises a connecting part and at least two blocking sheets, the connecting part is connected between each blocking sheet and an inner wall of the annular main body, and a flow-through hole is formed by a spacing between every two adjacent blocking sheets.

14. The battery according to claim 13, wherein each blocking sheet is disposed corresponding to at least one heat exchange flow channel and is configured to block the at least one heat exchange flow channel.

15. The battery according to any one of claims 6 to 14, wherein a second step surface is formed between a side, facing the manifold, of the connecting wall and an inner wall of the annular main body, and the second step surface is configured to be disposed in an enclosing manner around an outer periphery of the manifold when being connected to the manifold.

16. The battery according to claim 15, wherein the manifold comprises a first connecting part and a second connecting part; the first connecting part is disposed on the second connecting part, and a third step surface is formed between the first connecting part and the second connecting part; the third step surface is configured to be fitted to the second step surface.

17. The battery according to claim 116, wherein the annular main body is a light-transmitting material, and the second connecting part is a light-absorbing material.

18. The battery according to any one of claims 1 to 17, wherein the battery comprises a plurality of battery cells and a plurality of thermal management components, the plurality of battery cells are arranged in a plurality of rows, and each row of the battery cells is disposed between two adjacent thermal management components.

19. An electric device, comprising the battery according to any one of claims 1 to 18, the battery being used for providing electric energy.

20. A manufacturing process for a thermal management component, used for manufacturing the thermal management component according to any one of claims 1 to 18, the manufacturing process comprising the following steps:
connecting the connecting wall and an end surface of the heat exchange tube that abut against each other by laser welding, wherein a laser is emitted in a preset direction; and
fixing the manifold to one end, facing away from the heat exchange tube, of a corresponding adapter member in the preset direction.

21. The manufacturing process according to claim 20, wherein the step of fixing the manifold to the end, facing away from the heat exchange tube, of the corresponding adapter member in the preset direction specifically comprises the following steps:
disposing a second step surface in an enclosing manner around an outer periphery of a second connecting part and allowing the second step surface and a third step surface to be fitted to each other; and
performing laser welding between the second step surface and the third step surface, and emitting a laser in a direction intersecting the preset direction; and/or performing bonding or hot melt welding between an end surface of a first connecting part and an end surface of the adapter member.
